(19) Europäisches Patentamt
European Patent Office
Office européen des brevets

(11) **EP 2 903 153 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **14153083.2**

(22) Anmeldetag: **29.01.2014**

(51) Int Cl.:
*H02P 23/04* (2006.01)     *H02P 23/14* (2006.01)
*G01R 19/00* (2006.01)     *G01R 31/00* (2006.01)
*G05B 19/00* (2006.01)

(54) **SCHWINGUNGS- UND GERÄUSCHANALYSE EINER UMRICHTERGESPEISTEN ELEKTRISCHEN MASCHINE**

VIBRATION AND NOISE ANALYSIS OF AN INVERTER-SUPPLIED ELECTRIC MACHINE

ANALYSE DES VIBRATIONS ET DES BRUITS D'UNE MACHINE ÉLECTRIQUE ALIMENTÉE PAR UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.08.2015 Patentblatt 2015/32**

(73) Patentinhaber: **Siemens Aktiengesellschaft**
**80333 München (DE)**

(72) Erfinder:
• **Kartashov, Oleksandr**
  **91126 Schwabach (DE)**
• **Tischmacher, Hans**
  **91207 Lauf (DE)**
• **Tsoumas, Ioannis**
  **90402 Nürnberg (DE)**

(56) Entgegenhaltungen:
**EP-A- 2 421 148     DE-A1-102009 056 784**

**Beschreibung**

Die vorliegende Erfindung betrifft ein Ermittlungsverfahren zum Ermitteln einer elektrischen und mindestens einer mechanischen Übertragungsfunktion einer elektrischen Maschine, die über einen Umrichter an ein elektrisches Versorgungsnetz angeschaltet wird,

- wobei die elektrische Übertragungsfunktion angibt, in welchem Umfang bei einer Anregung mit einer Spannung einer bestimmten Frequenz in der elektrischen Maschine ein Strom gleicher Frequenz angeregt wird,
- wobei die mindestens eine mechanische Übertragungsfunktion angibt, in welchem Umfang bei einer Anregung mit einer Radialkraft im Luftspalt der elektrischen Maschine, die eine bestimmte Frequenz aufweist, in der elektrischen Maschine eine mechanische Schwingung gleicher Frequenz angeregt wird.

Als mechanische Schwingung wird im Rahmen der vorliegenden Erfindung sowohl eine Schwingung eines Elements der elektrischen Maschine angesehen (beispielsweise eines Gehäuses oder eines Blechpakets) als auch eine akustische Schwingung in der die elektrische Maschine umgebenden Luft. Zur sprachlichen Unterscheidung wird nachfolgend der Begriff mechanische Schwingung stets als Oberbegriff verwendet, der sowohl eine Schwingung eines Elements der elektrischen Maschine als auch eine akustische Schwingung umfasst. Sofern ausschließlich eine Schwingung eines Elements der elektrischen Maschine gemeint ist, wird nachfolgend der Begriff Vibration verwendet. Akustische Schwingungen werden als solche bezeichnet. In analoger Weise werden auch entsprechende Übertragungsfunktionen als mechanische, vibratorische oder akustische Übertragungsfunktion bezeichnet.

Die vorliegende Erfindung betrifft weiterhin einen Umrichter für eine elektrische Maschine, über welchen die elektrische Maschine an ein elektrisches Versorgungsnetz angeschaltet wird, wobei der Umrichter eine Steuereinrichtung aufweist.

Die vorliegende Erfindung betrifft weiterhin ein Steuerprogramm für eine softwareprogrammierbare Steuereinrichtung eines derartigen Umrichters, wobei das Steuerprogramm Maschinencode umfasst, der von der Steuereinrichtung unmittelbar ausführbar ist und dessen Ausführung durch die Steuereinrichtung die Betriebsweise des Umrichters festlegt.

Die oben genannten Gegenstände sind allgemein bekannt.

Beim Betrieb einer elektrischen Maschine an einem Umrichter entstehen zusätzlich zu den unvermeidbaren Betriebsgeräuschen der elektrischen Maschine zusätzliche Geräusche, welche von den Harmonischen des Stromes verursacht werden. Die Harmonischen des Stromes rufen im Luftspalt der elektrischen Maschine Radialkraftwellen hervor, das heißt Kraftwellen, bei denen die jeweilige Kraft in Radialrichtung der elektrischen Maschine wirkt. Die Radialkraftwellen sind die eigentliche Ursache für die zusätzlichen Geräusche. Die zusätzlichen Geräusche hängen in starkem Umfang von den Eigenschaften der Modulation des Umrichters wie beispielsweise der Pulsfrequenz ab. Die zusätzlichen Geräusche entstehen unabhängig davon, ob die elektrische Maschine als Motor oder als Generator betrieben wird.

Die zusätzlichen Geräusche haben ihre Ursache im Wesentlichen darin, dass die durch den Umrichter gepulste Spannung in der Wicklung der elektrischen Maschine Ströme hervorruft, die einen hohen Gehalt an Oberschwingungen aufweisen. Dadurch entstehen im Luftspalt der elektrischen Maschine höherfrequente Magnetfelder, die zu magnetisch verursachten Geräuschen führen. Die höherfrequenten Magnetfelder führen ferner zu Verformungen des Blechpakets der elektrischen Maschine in radialer Richtung und versetzen es dadurch in Schwingungen. Diese Schwingungen sind die Ursache für die zusätzlichen Geräuschemissionen. Oftmals treten die zusätzlichen Geräusche in erheblichem Umfang in einem Frequenzbereich zwischen 1 kHz und 5 kHz auf. Insbesondere für diesen Frequenzbereich ist das menschliche Ohr besonders empfindlich.

Zur theoretischen, modellgestützten Analyse der entsprechenden Geräusche und deren späterer Minimierung sollten nicht nur die Eigenschaften der Anregung (d.h. die Harmonischen des Stromes und die dadurch verursachten Radialkräfte), sondern auch die mechanische Übertragungsfunktion der elektrischen Maschine bekannt sein. Es ist daher ein entsprechendes Ermittlungsverfahren erforderlich.

Es ist zwar relativ einfach möglich, die elektrische Übertragungsfunktion zu bestimmen, da hierfür lediglich die an die elektrische Maschine angelegte Spannung und die in der elektrischen Maschine durch die angelegte Spannung hervorgerufenen Ströme gemessen werden müssen. Es ist jedoch schwierig, die durch die Ströme hervorgerufenen Radialkräfte im Luftspalt der elektrischen Maschine durch Messungen zu bestimmen, da hierfür die magnetischen Induktionswellen im Luftspalt gemessen werden müssten. Oftmals werden die magnetischen Induktionswellen daher im Stand der Technik durch analytische Gleichungen oder Berechnungen anhand von Finite-Element-Methoden bestimmt. Die akustische Übertragungsfunktion der elektrischen Maschine kann beispielsweise bei bekannter Anregung durch die Radialkraftwellen durch Messungen des Schalldruckpegels unter Berücksichtigung von Abstand des Mikrofons von der elektrischen Maschine und anderen Umgebungsbedingungen oder noch besser durch direkte Messung der Schallleistung - gegebenenfalls in Verbindung mit Messungen des Schalldruckpegels - berechnet werden. Die vibratorische Übertragungsfunktion wird üblicherweise durch eine sogenannte Modalanalyse gemessen. Zu diesem Zweck wird das Gehäuse der elektrischen Maschine mittels eines sogenannten Modalhammers zu Schwingungen angeregt. Die angeregten Schwingungen werden im Stand der Technik mittels Schwingungssensoren gemessen.

Aus der Dissertation "Lärmerzeugung in wechselrichtergespeisten Asynchronmaschinen und Lärmbeeinflussung durch optimierte Pulsmuster" von T. Eilinger, Eidgenössische Technische Hochschule Zürich, 1997, ist ein Verfahren zur Messung der mechanischen und der akustischen Übertragungsfunktion bekannt. Bei diesem Verfahren werden mittels einer dreiphasigen Signalquelle und eines Leistungsverstärkers am Klemmenkasten einer sinusgespeisten elektrischen Maschine der eigentlichen Speisung Oberschwingungen mit einem Frequenzabstand von 1 kHz überlagert. Die Oberschwingungen weisen die gleiche Drehrichtung wie die eigentliche Speisung auf. Die Wechselwirkung jeder Oberschwingung mit der Grundschwingung verursacht zwei Radialkraftwellen im Luftspalt, nämlich je eine Radialkraftwelle mit der Summe der beiden Frequenzen und der Differenz der beiden Frequenzen. Die Radialkraftwelle mit der Differenzfrequenz ist eine pulsierende Kraftwelle. Die Radialkraftwelle mit der Summenfrequenz ist eine drehende Kraftquelle, welche eine Ordnungszahl gleich der doppelten Polpaarzahl der Grundschwingung aufweist. In der genannten Dissertation wird vorgeschlagen, die Frequenz der Oberwellen jeweils um 50 Hz zu ändern und anschließend den Schalldruckpegel zu messen, um die Übertragungsfunktion für die pulsierenden und die rotierenden Komponenten als Funktion der Frequenz zu bestimmen.

Das in der Dissertation vorgeschlagene Verfahren erfordert eine zusätzliche Einrichtung mit Leistungsverstärkern, Kondensatoren, Induktanzen usw. für die Überlagerung der Oberschwingungen, die im Sinusbetrieb nicht vorhanden sind. Weiterhin ist das in der Dissertation vorgeschlagene Verfahren in der weit überwiegenden Mehrzahl von Fällen nur in einer reinen Testumgebung realisierbar, weil in praktischen Anwendungen die elektrischen Maschinen nicht sinusgespeist, sondern umrichtergespeist sind. Die Umrichterspeisung weist jedoch selbst bereits höherfrequente Komponenten auf, die sich mit den Anregungen überlagern können. Dadurch ist das Verfahren der Dissertation in der Praxis schwierig anzuwenden, insbesondere nicht vor Ort bei einem schon installierten System mit Umrichter und elektrischer Maschine. Darüber hinaus ist das in der Dissertation vorgeschlagene Verfahren aufwändig.

Aus der DE 10 2009 056 784 A1 ist eine elektrische Maschine bekannt, die über einen Umrichter gespeist wird. Bei Ansteuerung der elektrischen Maschine durch den Umrichter wird einem eigentlichen Ansteuersignal ein Zusatzsignal überlagert, um die Generierung eines bei der Ansteuerung der elektrischen Maschine entstehenden Geräuschs zu minimieren. In der DE 10 2009 056 784 A1 ist erläutert, dass es möglich ist, zur Minimierung des Geräuschs das entstehende Geräusch mittels eines Mikrofons zu erfassen und einer Steuereinrichtung für den Umrichter zuzuführen. Die Steuereinrichtung kann in dieser Ausgestaltung das akustische Signal auswerten und basierend auf der Auswertung das Zusatzsignal generieren. Als mögliche Alternative ist in der DE 10 2009 056 784 A1 erläutert, das Störgeräusch in Abhängigkeit von einer Vielzahl möglicher Motoransteuersignale zu erfassen und nachfolgend ein jeweiliges, zur Geräuschminderung geeignetes Zusatzsignal zu ermitteln, daraus einen geeigneten Regelalgorithmus abzuleiten und den Regelalgorithmus in der Steuereinrichtung für den Umrichter zu hinterlegen.

Aus der EP 2 421 148 A1 ist ein Verfahren bekannt, mittels dessen bei Kenntnis der elektrischen Übertragungsfunktion einer elektrischen Maschine magnetomechanische Kenngrößen der elektrischen Maschine, insbesondere deren Massenträgheitmoment, ermittelt werden können.

Die Aufgabe der vorliegenden Erfindung besteht darin, Möglichkeiten zu schaffen, auch bei einer umrichtergespeisten elektrischen Maschine auf einfache und zuverlässige Weise die elektrische und die mechanische Übertragungsfunktion ermitteln zu können.

Die Aufgabe wird durch ein Ermittlungsverfahren mit den Merkmalen des Anspruchs 1 gelöst. Vorteilhafte Ausgestaltungen des erfindungsgemäßen Ermittlungsverfahrens sind Gegenstand der abhängigen Ansprüche 2 bis 7.

Erfindungsgemäß wird im Rahmen der Ermittlung der Übertragungsfunktionen für die Anregung der elektrischen Maschine der Umrichter selbst verwendet. Die entsprechenden erfindungsgemäßen Merkmale bestehen darin,

- dass durch entsprechende Ansteuerung des Umrichters ein Hochlauf der elektrischen Maschine von einer Anfangsdrehzahl zu einer Enddrehzahl durchgeführt wird,
- dass beim Hochlauf der elektrischen Maschine die elektrische Maschine mit einem jeweiligen Spannungsverlauf beaufschlagt wird,
- dass der jeweilige Spannungsverlauf derart bestimmt ist, dass ein zugehöriges Spannungsspektrum zusätzlich zu einer Grundschwingung bei einer Grundfrequenz vorbestimmte Anteile vorbestimmter Oberschwingungen der Grundfrequenz enthält,
- dass mittels entsprechender Sensoren zumindest ein sich ergebender korrespondierender jeweiliger Stromverlauf und ein sich ergebender korrespondierender mechanischer Schwingungsverlauf erfasst werden,
- dass anhand des jeweiligen Stromverlaufs ein korrespondierendes jeweiliges Stromspektrum ermittelt wird und anhand des jeweiligen Stromspektrums und des jeweiligen Spannungsspektrums die elektrische Übertragungsfunktion bei mindestens einer der vorbestimmten Oberschwingungen der Grundfrequenz ermittelt wird,
- dass anhand des jeweiligen Stromspektrums ein korrespondierendes jeweiliges Radialkraftspektrum im Luftspalt der elektrischen Maschine ermittelt wird,

- dass anhand des erfassten jeweiligen mechanischen Schwingungsverlaufs ein korrespondierendes jeweiliges Schwingungsspektrum ermittelt wird und
- dass anhand des jeweiligen Radialkraftspektrums und des jeweiligen Schwingungsspektrums für mindestens eine Oberschwingung der Grundfrequenz die mindestens eine mechanische Übertragungsfunktion der elektrischen Maschine ermittelt wird.

Bei der mechanischen Übertragungsfunktion kann es sich, wie bereits erwähnt, alternativ um eine vibratorische oder um eine akustische Übertragungsfunktion handeln. Es ist jedoch selbstverständlich auch möglich, beide Übertragungsfunktionen zu ermitteln.

In aller Regel ist die elektrische Maschine dreiphasig ausgebildet. In diesem Fall können prinzipbedingt Oberschwingungen, deren Frequenz einem durch 3 teilbaren ganzzahligen Vielfachen der Grundfrequenz entspricht, nicht auftreten. Allgemein gilt dies bei einer k-phasigen Maschine für durch k teilbare ganzzahlige Vielfache der Grundfrequenz. Weiterhin sind insbesondere diejenigen Oberschwingungen von Bedeutung, deren Frequenz ein ungeradzahliges Vielfaches der Grundfrequenz ist.

Es ist von Vorteil, dass für unmittelbar aufeinanderfolgende Oberschwingungen der Spannungen die Beziehung F2 - F1 > 2f1 gilt, wobei F1 und F2 die Frequenzen der beiden Oberschwingungen und f1 die Grundfrequenz sind. Durch diese Vorgehensweise wird erreicht, dass jede angeregte Radialkraftwelle durch eine einzige im Spannungsspektrum auftretende Frequenz angeregt wird.

Vorzugsweise gilt für die Oberschwingungen der Spannungen die Beziehung F = nf1 gilt, wobei F die Frequenz der jeweiligen Oberschwingung und f1 die Grundfrequenz sind, wobei n eine natürliche Zahl ist, welche eine der Beziehungen n = 2km + 1 und n = 2km - 1 erfüllt, wobei k die Anzahl an Phasen der elektrischen Maschine ist und m eine natürliche Zahl größer als 1 ist. m ist vorzugsweise insbesondere größer als 3, größer als 4 und ganz besonders bevorzugt größer als 6. m kann auch noch größere Werte aufweisen, beispielsweise 8, 10 oder 12. Dadurch wird eine besonders saubere Trennung der einzelnen angeregten Schwingungen erreicht.

Das Radialkraftspektrum im Luftspalt der elektrischen Maschine umfasst pulsierende und rotierende Radialkraftwellen. Vorzugsweise wird für die pulsierenden und für die rotierenden Radialkraftwellen je eine eigene mechanische Übertragungsfunktion ermittelt.

Je nach Lage des Einzelfalls kann der mechanische Schwingungsverlauf eine Schwingung eines Elements der elektrischen Maschine und/oder eine Schallabstrahlung sein.

Es ist möglich, im Rahmen der Ermittlung der elektrischen Übertragungsfunktion dasjenige Spannungsspektrum zu verwenden, das der Ansteuerung des Umrichters zugrundeliegt. Alternativ ist es möglich, dass der Spannungsverlauf erfasst wird und dass anhand des erfassten Spannungsverlaufs das Spannungsspektrum ermittelt wird. In diesem Fall wird also das tatsächliche Spannungsspektrum verwendet, nicht das theoretisch erwartete Spannungsspektrum.

Es ist möglich, dass das entsprechende Ermittlungsverfahren in einer Testumgebung ausgeführt wird. Vorzugsweise jedoch wird das Ermittlungsverfahren von einer Steuereinrichtung des Umrichters in einem Ermittlungsmodus des Umrichters ausgeführt. Dadurch ist insbesondere auch eine Ausführung des Ermittlungsverfahrens vor Ort möglich. Beispielsweise kann das Ermittlungsverfahren jedes Mal erneut ausgeführt werden, wenn das aus Umrichter und elektrischer Maschine bestehende System miteinander verbunden wird, wenn also eine erstmalige Verschaltung von Umrichter und elektrischer Maschine erfolgt oder wenn entweder der Umrichter oder die elektrische Maschine ausgetauscht werden.

Ausgehend von den ermittelten Übertragungsfunktionen kann eine Optimierung vorgenommen werden. Die Optimierung hat in der Regel das Ziel, Schwingungen von Elementen der elektrischen Maschine und/oder das im Betrieb der elektrischen Maschine entstehende Geräusch zu minimieren. Es sind jedoch auch andere Optimierungen denkbar. Es ist möglich, ausgehend von der Ermittlung der Übertragungsfunktionen mechanische Eigenschaften der elektrischen Maschine zu variieren. Vorzugsweise besteht ein Optimierungsverfahren zur Optimierung einer mechanischen Schwingung einer elektrischen Maschine, die über einen Umrichter an ein elektrisches Versorgungsnetz angeschaltet wird, jedoch darin, dass entsprechend Anspruch 8

- mittels eines erfindungsgemäßen Ermittlungsverfahrens (wie obenstehend erläutert) eine elektrische und mindestens eine mechanische Übertragungsfunktion der elektrischen Maschine ermittelt werden und
- unter Verwendung der ermittelten Übertragungsfunktionen gemäß einem Optimierungskriterium für Frequenzen und Aussteuergrade der elektrischen Maschine ein jeweiliger optimierter Spannungsverlauf ermittelt und im Umrichter hinterlegt wird.

In Umrichter wird also ein zweidimensionales Feld mit jeweiligen optimierten Spannungsverläufen als Funktion der Frequenz und des Aussteuergrades hinterlegt.

Der Aussteuergrad G der elektrischen Maschine ist üblicherweise definiert als

$$G = \sqrt{2}\,\frac{ULL}{UZK}$$

wobei ULL der Effektivwert der Grundwelle der an der elektrischen Maschine anliegenden Leiter-Leiter-Spannung und UZK die Zwischenkreisspannung des den Umrichter speisenden Zwischenkreises sind.

Variiert werden können im Rahmen des Optimierungsverfahrens beispielsweise das Modulationsverfahren des Umrichters, dessen Schaltfrequenz und das Schaltmuster.

Es ist möglich, dass das Optimierungsverfahren stets in unveränderter Form durchgeführt wird. Vorzugsweise ist es jedoch möglich, dass einer das Optimierungsverfahren durchführenden Einrichtung das Optimierungskriterium und/oder Parameter des Ermittlungsverfahrens von außen vorgegeben werden. Dies erhöht die Flexibilität des Optimierungsverfahrens. Parameter des Ermittlungsverfahrens können beispielsweise ein Frequenzbereich für die Grundschwingung der Spannung oder Anteile von Oberschwingungen der Spannung sein.

Es ist möglich, dass das entsprechende Optimierungsverfahren in einer Testumgebung ausgeführt wird. Vorzugsweise jedoch wird das Optimierungsverfahren von einer Steuereinrichtung des Umrichters in einem Optimierungsmodus des Umrichters ausgeführt. In diesem Fall liest die Steuereinrichtung in einem Normalmodus des Umrichters die im Optimierungsmodus im Umrichter hinterlegten optimierten Spannungsverläufe aus und verwendet sie. Dadurch ist insbesondere auch eine Ausführung des Optimierungsverfahrens vor Ort möglich. Beispielsweise kann - analog zum Ermittlungsverfahren - das Optimierungsverfahren jedes Mal erneut ausgeführt werden, wenn das aus Umrichter und elektrischer Maschine bestehende System miteinander verbunden wird, wenn also eine erstmalige Verschaltung von Umrichter und elektrischer Maschine erfolgt oder wenn entweder der Umrichter oder die elektrische Maschine ausgetauscht werden.

Die Aufgabe wird weiterhin durch einen Umrichter mit den Merkmalen des Anspruchs 11 gelöst. Vorteilhafte Ausgestaltungen des erfindungsgemäßen Umrichters sind Gegenstand des abhängigen Anspruchs 12.

Erfindungsgemäß wird ein Umrichter der eingangs genannten Art dadurch ausgestaltet, dass die Steuereinrichtung den Umrichter in einem Normalmodus oder in einem Ermittlungsmodus betreibt, dass die Steuereinrichtung als softwareprogrammierbare Einrichtung ausgebildet ist, und im Ermittlungsmodus ein erfindungsgemäßes Ermittlungsverfahren ausführt und dass die Steuereinrichtung im Normalmodus im Umrichter hinterlegte Spannungsverläufe ausliest und verwendet.

Vorzugsweise führt die Steuereinrichtung den Ermittlungsmodus im Rahmen eines Optimierungsmodus aus. In diesem Fall führt die Steuereinrichtung im Optimierungsmodus ein erfindungsgemäßes Optimierungsverfahren aus. Weiterhin liest sie im Normalmodus die im Optimierungsmodus im Umrichter hinterlegten optimierten Spannungsverläufe aus und verwendet sie.

Die Aufgabe wird weiterhin durch ein Steuerprogramm mit den Merkmalen des Anspruchs 13 gelöst.

Erfindungsgemäß bewirkt die Ausführung des Maschinencodes, dass der Umrichter erfindungsgemäß ausgebildet ist.

Das Steuerprogramm kann der Steuereinrichtung auf beliebigem Wege zugeführt werden, beispielsweise über eine Rechner-Rechner-Anbindung wie ein LAN oder das Internet. Auch andere Schnittstellen sind möglich, beispielsweise eine Profibus-Schnittstelle. Alternativ ist es möglich, das Steuerprogramm der Steuereinrichtung über einen (mobilen) Datenträger zuzuführen, auf dem das Steuerprogramm in maschinenlesbarer Form - insbesondere in elektronischer Form - gespeichert ist. Unabhängig davon, auf welche Weise das Steuerprogramm der Steuereinrichtung zugeführt wird, ist es jedoch innerhalb der Steuereinrichtung in einem der Steuereinrichtung fest oder temporär zugeordneten Datenträger hinterlegt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1        eine umrichtergespeiste elektrische Maschine,

FIG 2        ein Ablaufdiagramm,

FIG 3        ein Spannungsspektrum und ein entsprechendes Spektrum von Radialkraftwellen,

FIG 4        einen Spannungsverlauf und

FIG 5 bis 7        Ablaufdiagramme.

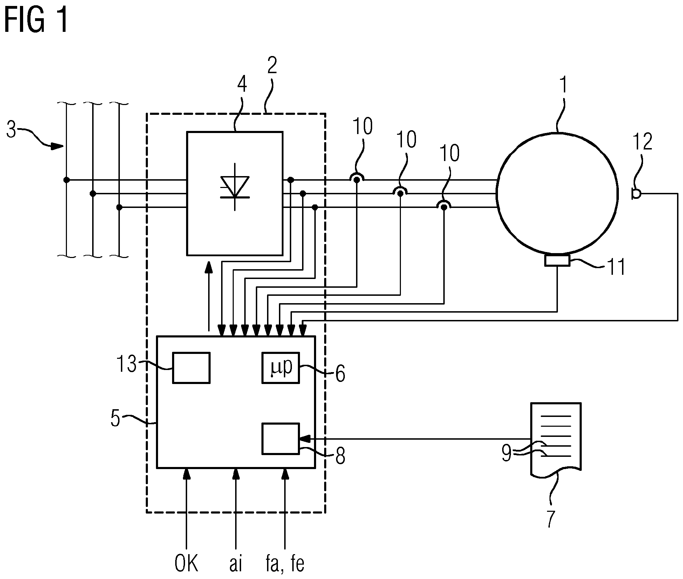

Gemäß FIG 1 wird eine elektrische Maschine 1 über einen Umrichter 2 an ein elektrisches Versorgungsnetz 3 angeschaltet. Der Umrichter 2 besteht einerseits aus einem Stromrichter 4 und andererseits aus einer Steuereinrichtung 5 für den Stromrichter 4. Das Versorgungsnetz 3 ist in der Regel ein dreiphasiges Drehstromnetz. Die elektrische Maschine 1 ist eine Drehstrommaschine. Der Umrichter 2 ist als Zwischenkreisumrichter ausgebildet. In der Regel erfolgt mittels des Stromrichters 4 eine dreiphasige Speisung der elektrischen Maschine 1. Prinzipiell sind jedoch auch Speisungen mit mehr als drei Phasen möglich.

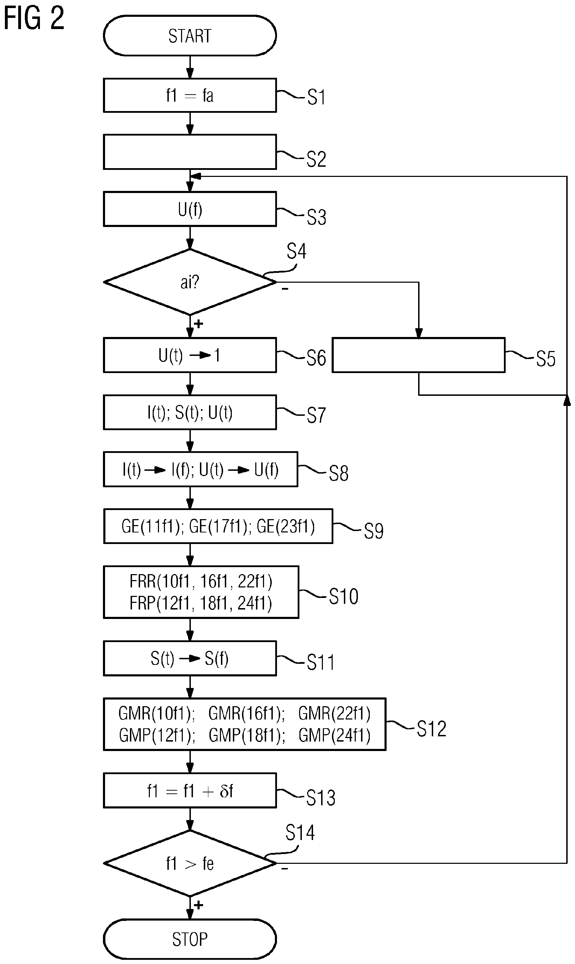

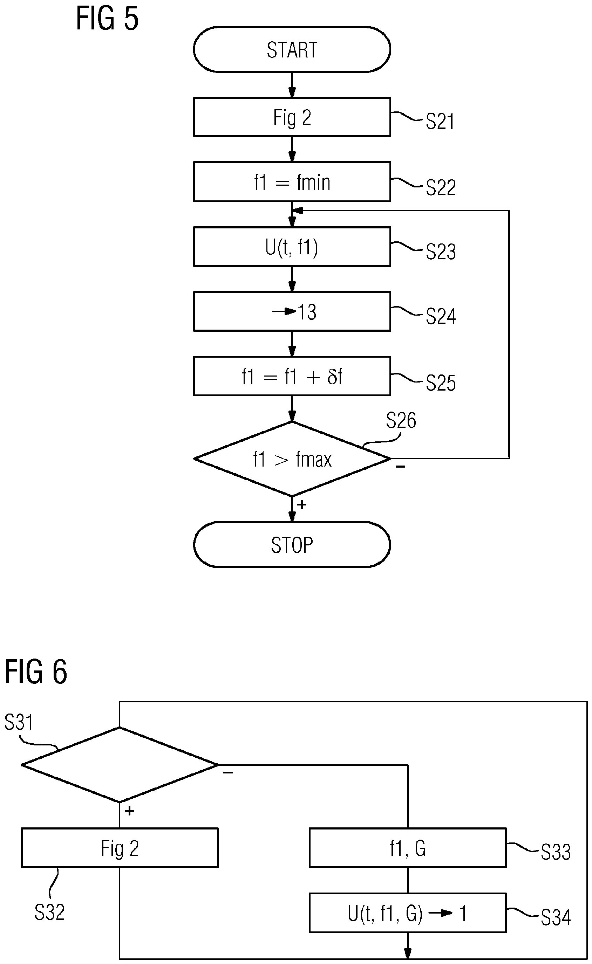

Die Steuereinrichtung 5 ist in der Regel als softwareprogrammierbare Einrichtung ausgebildet. Sie weist daher intern zum einen einen Prozessor 6 auf, der ein Steuerprogramm 7 ausführt. Zum anderen weist die Steuereinrichtung 5 einen Programmspeicher 8 auf, in dem das Steuerprogramm 7 in maschinenlesbarer Form hinterlegt ist. Das Steuerprogramm 8 umfasst Maschinencode 9, der von der Steuereinrichtung 5 - genauer: von deren Prozessor 6 - unmittelbar ausführbar ist. Die Ausführung des Maschinencodes 9 durch die Steuereinrichtung 5 legt die Betriebsweise des Umrichters 2 fest. Insbesondere bewirkt die Ausführung des Maschinencodes 9, das der Umrichter 2 derart ausgebildet wird, dass er zumindest ein Ermittlungsverfahren, wie es nachstehend in Verbindung mit FIG 2 näher erläutert wird, vorzugsweise auch ein Optimierungsverfahren, wie es nachstehend in Verbindung mit FIG 5 erläutert wird, und besonders bevorzugt ein Betriebsverfahren, wie es nachstehend in Verbindung mit FIG 6 erläutert wird, ausführt.

Im Rahmen der Vorgehensweise von FIG 2 wird ein Ermittlungsverfahren erläutert, mittels dessen eine elektrische und (mindestens) eine mechanische Übertragungsfunktion GE, GMR, GMP der elektrischen Maschine 1 ermittelt werden. Die elektrische Übertragungsfunktion GE gibt an, in welchem Umfang und gegebenenfalls auch mit welcher Phasenlage bei einer Anregung mit einer (sinusförmigen) Spannung U mit einer bestimmten Frequenz f in der elektrischen Maschine 1 ein Strom I gleicher Frequenz f angeregt wird. Die mechanischen Übertragungsfunktionen GMP, GMR geben an, in welchem Umfang bei einer (sinusförmigen) Radialkraft im Luftspalt der elektrischen Maschine 1, die eine bestimmte Frequenz f aufweist, in der elektrischen Maschine 1 eine mechanische Schwingung S gleicher Frequenz f angeregt wird. Die mechanische Schwingung S kann beispielsweise eine Vibration eines mechanischen Elements der elektrischen Maschine 1 oder eine Schallabstrahlung sein.

Bei einer bestimmten Frequenz kann die Radialkraft im Luftspalt der elektrischen Maschine 1 alternativ als pulsierende Radialkraftwelle, als rotierende Radialkraftwelle oder als Linearkombination einer pulsierenden und einer rotierenden Radialkraftwelle ausgebildet sein. Das Radialkraftspektrum im Luftspalt der elektrischen Maschine 1 kann daher sowohl pulsierende als auch rotierende Radialkraftwellen umfassen. Eine rotierende Radialkraftwelle kann eine andere Anregung einer mechanischen Schwingung als eine pulsierende Radialkraftwelle gleicher Frequenz zur Folge haben. Es muss daher zwischen einer mechanischen Übertragungsfunktion GMP für pulsierende Radialkraftwellen und einer mechanischen Übertragungsfunktion GMR für rotierende Radialkraftwellen unterschieden werden.

Zur Ermittlung der Übertragungsfunktionen GE, GMP, GMR wird gemäß FIG 2 wie folgt vorgegangen: In einem Schritt S1 wird eine Grundfrequenz f1 auf einen Anfangswert fa gesetzt. Der Anfangswert fa kann nach Bedarf bestimmt sein und beispielsweise im einstelligen Hertz-Bereich liegen. In einem Schritt S2 werden Schaltwinkel festgelegt, zu denen der Umrichter 2 jeweils geschaltet werden soll. In einem Schritt S3 wird anhand der Schaltwinkel das zugehörige Spannungsspektrum U(f) ermittelt. In einem Schritt S4 wird geprüft, ob Anteile ai (i = 1, 5, 7 usw.) von vorbestimmten Oberschwingungen der Grundfrequenz f1 gewünschte Werte aufweisen. Der Index i gibt an, um das Wievielfache der Grundfrequenz f1 es sich handelt. Der Anteil a1 ist beispielsweise der Anteil der Grundfrequenz f1, der Anteil a5 der Anteil der vierten Oberschwingung, das heißt einer Frequenz, die dem Fünffachen der Grundfrequenz f1 entspricht, usw.. Wenn die Prüfung des Schrittes S4 negativ verläuft, wird zu einem Schritt S5 übergegangen. Im Schritt S5 werden die Schaltwinkel variiert. Sodann wird zum Schritt S3 zurückgegangen. Wenn die Prüfung des Schrittes S4 hingegen positiv verläuft, wird zu einem Schritt S6 übergegangen.

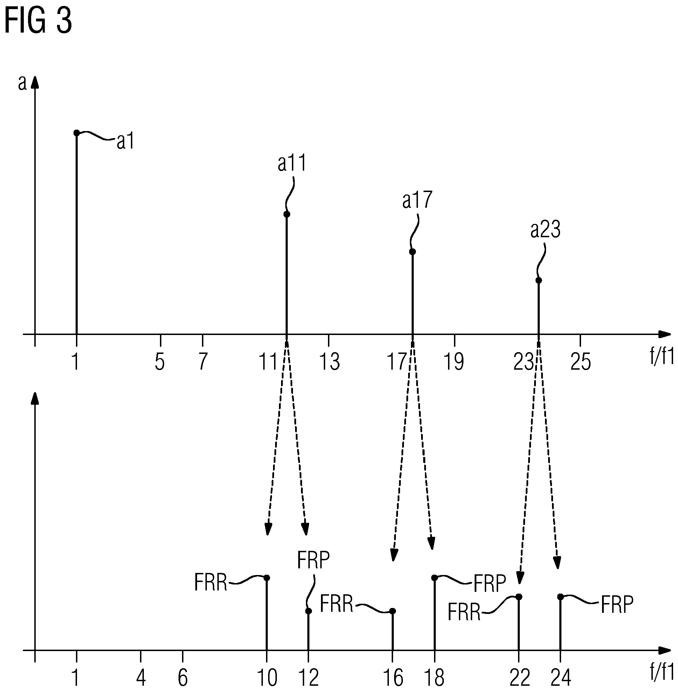

FIG 3 zeigt rein beispielhaft ein derartiges gewünschtes Spannungsspektrum U(f). Für jede Oberschwingung gilt - kraft Definition des Begriffs Oberschwingung - die Beziehung F = nf1. F ist die Frequenz der betrachteten Oberschwingung, n eine natürliche Zahl. Gemäß FIG 3 gilt für jede Oberschwingung der Spannung U weiterhin entweder die Beziehung n = 6m+1 oder die Beziehung n = 6m-1. Die Zahl m ist eine natürliche Zahl. Es sollen also nur die ungeradzahligen Vielfachen der Grundfrequenz f1 auftreten. Ein derartiges Spektrum tritt zumindest dann auf, wenn der Spannungsverlauf mit einer Viertelperiode der Grundfrequenz f1 symmetrisch ist.

FIG 3 zeigt zugleich zwei bevorzugte Ausgestaltungen des Spannungsspektrums U(f). Die beiden bevorzugten Ausgestaltungen sind unabhängig voneinander realisierbar. Vorzugsweise sie jedoch entsprechend der Darstellung in FIG 3 miteinander kombiniert.

Die eine bevorzugte Ausgestaltung besteht darin, dass für unmittelbar aufeinanderfolgende Oberschwingungen der Spannungen die Beziehung F2 - F1 > 2f1 gilt. F1 und F2 sind in vorstehender Beziehung die Frequenzen der beiden betrachteten Oberschwingungen. Anders ausgedrückt: Wenn eine bestimmte, im Spannungsspektrum U(f) enthaltene Oberschwingung die Bedingung $F = (6m + 1)f1$ erfüllt, ist im Spannungsspektrum U(f) keine Oberschwingung enthalten, die für denselben Wert der Zahl m die Bedingung $F = (6m - 1)f1$ erfüllt. Ebenso gilt die umgekehrte Ausschlussbedingung. Von den beiden Oberschwingungen, von denen für einen bestimmten Wert der Zahl m je eine Oberschwingung eine der beiden Beziehungen $F = (6m - 1)f1$ und $F = (6m + 1)f1$ erfüllt, ist also stets entweder keine oder nur eine einzige Oberschwingung im Spannungsspektrum U(f) enthalten, nicht aber beide Oberschwingungen. Die Darstellung in FIG 3, gemäß der im Spannungsspektrum U(f) ausschließlich Oberschwingungen enthalten sind, welche die Bedingung $F = (6m - 1)f1$ erfüllen, ist jedoch rein beispielhaft. Es ist ebenso möglich, dass einige oder alle im Spannungsspektrum U(f) enthaltenen Oberschwingungen die Bedingung $F = (6m + 1)f1$ erfüllen.

Die andere bevorzugte Ausgestaltung besteht darin, dass für die Oberschwingungen die Bedingung gilt, dass m größer als 1 ist. Die Zahl m kann beispielsweise den Wert 2, den Wert 3 oder den Wert 4 aufweisen. Auch noch größere Werte für die Zahl m sind möglich, beispielsweise m größer als 6 oder m größer als 10. Unabhängig vom konkreten Wert der Zahl m treten jedoch zumindest die 4. und die 6. Oberschwingung (deren Frequenzen gleich dem fünffachen bzw. dem siebenfachen der Grundfrequenz f1 sind) im Spannungsspektrum U(f) nicht auf.

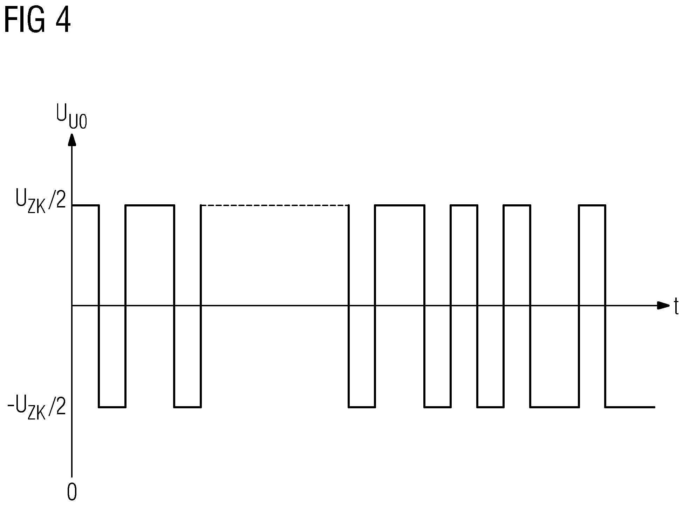

Die Schaltwinkel legen auch einen entsprechenden zeitlichen Spannungsverlauf U(t) fest. FIG 4 zeigt - rein exemplarisch - einen möglichen Spannungsverlauf U(t). Zur Bestimmung des zeitlichen Spannungsverlaufs U(t) können beispielsweise bei einer gegebenen Anzahl an Schaltpunkten pro Periode des Spannungsverlaufs U(t) die optimalen Schaltzeiten ermittelt werden, so dass der sich ergebende zeitliche Spannungsverlauf U(t) so weit wie möglich mit dem gewünschten Spannungsspektrum U(f) korrespondiert.

Entsprechend dem in den Schritten S1 bis S5 ermittelten Spannungsverlauf U(t) wird in einem Schritt S6 der Umrichter 2 angesteuert. Die Steuereinrichtung 5 steuert also im Schritt S6 den Stromrichter 4 entsprechend an. Dadurch wird die elektrische Maschine 1 bei der jeweiligen Frequenz f1 mit dem entsprechenden Spannungsverlauf U(t) beaufschlagt. Die Ansteuerung des Umrichters 2 hat zur Folge, dass die elektrische Maschine 1 mit einer Drehzahl rotiert, die linear von der Grundfrequenz f1 abhängt.

Mittels entsprechender Stromsensoren 10 wird in einem Schritt S7 ein sich ergebender korrespondierender jeweiliger zeitlicher Stromverlauf I(t) erfasst. Der erfasste Stromverlauf I(t) kann beispielsweise der Steuereinrichtung 5 zugeführt werden. Weiterhin wird mittels entsprechender Schwingungssensoren 11, 12 ein sich ergebender korrespondierender mechanischer Schwingungsverlauf S(t) erfasst. Als Schwingungssensor 11, 12 kommt beispielsweise ein Sensor 11 in Frage, mittels dessen direkt eine Vibration eines mechanischen Elements der elektrischen Maschine 1 erfasst wird. In diesem Fall ist der erfasste mechanische Schwingungsverlauf S(t) eine Schwingung dieses Elements der elektrischen Maschine 1. Ebenso kommt als Schwingungssensor 11, 12 beispielsweise ein Mikrofon 12 in Frage. In diesem Fall ist der erfasste mechanische Schwingungsverlauf S(t) eine Schallabstrahlung der elektrischen Maschine 1. Es ist möglich, dass von den Schwingungssensoren 11, 12 nur einer vorhanden ist. Gleichermaßen können jedoch beide Schwingungssensoren 11, 12 vorhanden sein. Ferner kann gegebenenfalls zusätzlich zu dem Stromverlauf I(t) und dem Schwingungsverlauf S(t) auch der Spannungsverlauf U(t) erfasst werden.

In einem Schritt S8 wird - beispielsweise durch Fouriertransformation - anhand des erfassten Stromverlaufs I(t) ein korrespondierendes jeweiliges Stromspektrum I(f) ermittelt. Falls im Rahmen des Schrittes S7 auch der Spannungsverlauf U(t) erfasst wird, wird weiterhin anhand des erfassten Spannungsverlaufs U(t) auch das (tatsächliche) Spannungsspektrum U(f) ermittelt. In einem Schritt S9 wird sodann - beispielsweise durch Quotientenbildung - anhand des jeweiligen Stromspektrums I(f) und des jeweiligen Spannungsspektrums U(f) bei mindestens einer der vorbestimmten Oberschwingungen der jeweiligen Grundfrequenz f1 die elektrische Übertragungsfunktion GE ermittelt. Wenn beispielsweise entsprechend der Darstellung in FIG 3 das Spannungsspektrum U(f) zusätzlich zur Grundfrequenz f1 (unter anderem) den Anteil a11 der zehnten Oberschwingung enthält, kann für diese Frequenz, also für das elffache der Grundfrequenz f1, die elektrische Übertragungsfunktion GE ermittelt werden. Analoge Vorgehensweisen sind auch für andere Oberschwingungen möglich, die im Spannungsspektrum U(f) enthalten sind, beispielsweise die 16. oder die 22. Oberschwingung.

Die Oberschwingungen im Stromspektrum I(f) bewirken im Zusammenwirken mit der Grundschwingung gemäß FIG 3 im Luftspalt der elektrischen Maschine 1 jeweils eine rotierende Radialkraftwelle FRR und eine pulsierende Radialkraftwelle FRP. Je eine der beiden Radialkraftwellen FRR, FRP tritt bei der Summe der Frequenz der jeweiligen Oberschwingung und der Grundfrequenz f1 und bei der Differenz dieser beiden Frequenzen auf. Sofern im Stromspektrum I(f) die 10. Oberschwingung enthalten ist, weist diese Oberschwingung im Vergleich zur Grundschwingung die inverse Drehrichtung auf. In der Überlagerung mit der Grundschwingung bewirkt diese Oberschwingung beispielsweise eine rotierende Radialkraftwelle FRR beim zehnfachen der Grundfrequenz f1 und eine pulsierende Radialkraftwelle FRP beim zwölffachen der Grundfrequenz f1. Sofern im Stromspektrum I(f) die 12. Oberschwingung enthalten ist, weist diese Oberschwingung im Vergleich zur Grundschwingung die gleiche Drehrichtung auf. In der Überlagerung mit der Grundschwingung bewirkt diese Oberschwingung beispielsweise eine rotierende Radialkraftwelle FRR beim vierzehnfachen der Grundfrequenz f1 und eine pulsierende Radialkraftwelle FRP beim zwölffachen der Grundfrequenz f1.

Aus diesem Sachverhalt ist auch ersichtlich, warum von den beiden Oberschwingungen, von denen für einen bestimmten Wert der Zahl m je eine Oberschwingung eine der beiden Beziehungen F = (6m-1) f1 und F = (6m+1) f1 bzw. allgemein F = (2km+1) f1 und F = (2km-1) f1 erfüllt, nicht beide Oberschwingungen im Spannungsspektrum U(f) vorhanden sein sollten: Wenn dies der Fall wäre, wäre die resultierende pulsierende Radialkraftwelle FRP beim 6m-fachen (allgemein dem 2km-fachen) der Grundfrequenz f1 eine Überlagerung der durch die Oberschwingung mit dem (6m-1)-fachen der Grundfrequenz f1 hervorgerufenen pulsierenden Radialkraftwelle FRP mit der durch die Oberschwingung mit dem (6m+1)-fachen der Grundfrequenz f1 hervorgerufenen pulsierenden Radialkraftwelle FRP. Frequenzen der entstehenden mechanischen Schwingung S könnten daher nicht mehr eindeutig einer bestimmten anregenden Stromkomponente zugeordnet werden.

Die rotierenden Radialkraftwellen FRR und die pulsierenden Radialkraftwellen FRP werden in einem Schritt S10 ermittelt. Die Ermittlung der Radialkraftwellen FRR, FRP ist Fachleuten als solches bekannt. Es werden zur Ermittlung der Radialkraftwellen FRR, FRP zusätzlich zur Stromverteilung im Frequenzbereich, also dem Stromspektrum I(f), konstruktive Gegebenheiten der elektrischen Maschine 1 benötigt. Im Schritt S10 erfolgt die Ermittlung der Radialkraftwellen FRR, FRP also anhand des jeweiligen Stromspektrums I(f). Die Gesamtheit der ermittelten Radialkraftwellen FRR, FRP entspricht einem Radialkraftspektrum FRR(f), FRP(f) im Luftspalt der elektrischen Maschine 1. Die Radialkraftwellen FRR, FRP sind, wie bereits erwähnt, die eigentliche Ursache für die magnetisch bedingten mechanischen Schwingungen S der elektrischen Maschine 1.

In einem Schritt S11 wird anhand des erfassten jeweiligen mechanischen Schwingungsverlaufs S(t) ein korrespondierendes jeweiliges Schwingungsspektrum S(f) ermittelt. Das Schwingungsspektrum S(f) enthält die gleichen Frequenzen wie das Radialkraftspektrum FRR(f), FRP(f). Es ist daher möglich, in einem Schritt S12 anhand des jeweiligen Radialkraftspektrums FRR(f), FRP(f) und des jeweiligen Schwingungsspektrums S(f) für mindestens eine Oberschwingung der Grundfrequenz f1 eine mechanische Übertragungsfunktion GMP, GMR der elektrischen Maschine 1 zu ermitteln. Auch hier kann die Ermittlung wieder durch Bildung des Quotienten erfolgen.

Die Grundfrequenz f1 korrespondiert, wie bereits erwähnt, mit einer Drehzahl der elektrischen Maschine 1. Aufgrund des Anschaltens der elektrischen Maschine 1 an das elektrische Versorgungsnetz 3 erhöht sich während der Ausführung der Schritte S6 bis S12 die Drehzahl der elektrischen Maschine 1. Dies wird in einem Schritt S13 nachvollzogen, in dem die Grundfrequenz f1 um eine Frequenzänderung δf erhöht wird. Es ist möglich, dass zu diesem Zweck die aktuelle Drehzahl der elektrischen Maschine 1 erfasst wird. Es sind jedoch auch andere Vorgehensweisen möglich. Die Grundfrequenz f1 und hiermit korrespondierend die Drehzahl der elektrischen Maschine 1 werden also nach und nach angehoben.

In einem Schritt S14 wird geprüft, ob die Grundfrequenz f1 einen Endwert fe erreicht hat. Solange dies nicht der Fall ist, wird zum Schritt S3 zurückgegangen. Anderenfalls ist die Vorgehensweise von FIG 2 beendet. Somit wird im Rahmen der Vorgehensweise von FIG 2 ein Hochlauf der elektrischen Maschine 1 von einer Anfangsdrehzahl zu einer Enddrehzahl durchgeführt.

Aufbauend auf dem obenstehend in Verbindung mit FIG 2 erläuterten Ermittlungsverfahren kann beispielsweise eine Optimierung der elektrischen Maschine 1 als solche vorgenommen werden. Beispielsweise können bestimmte Elemente der elektrischen Maschine 1 anders dimensioniert werden, um mechanische Schwingungen der elektrischen Maschine 1 selbst oder eine Geräuschemission der elektrischen Maschine 1 zu optimieren (im Regelfall zu minimieren). Alternativ oder zusätzlich ist es möglich, aufbauend auf dem Ermittlungsverfahren von FIG 2 im Rahmen eines auf dem Ermittlungsverfahren aufbauenden Optimierungsverfahrens zur Optimierung einer mechanischen Schwingung S der elektrischen Maschine 1 eine optimierte Ansteuerung des Stromrichters 4 zu ermitteln. Dies wird nachstehend in Verbindung mit FIG 5 näher erläutert.

Entsprechend der Darstellung in FIG 5 werden zunächst in einem Schritt S21 eine elektrische und mindestens eine mechanische Übertragungsfunktion GE, GMP, GMR der elektrischen Maschine 1 ermittelt. Der Schritt S21 entspricht der Gesamtheit der Schritte S1 bis S14 von FIG 2.

In einem Schritt S22 wird die Grundfrequenz f1 auf einen Minimalwert fmin gesetzt. In einem Schritt S23 wird für die Grundfrequenz f1 ein zeitlicher Spannungsverlauf U (t) ermittelt. Die Ermittlung des Schrittes S23 erfolgt unter Verwendung der Übertragungsfunktionen GE, GMP, GMR. Der Spannungsverlauf U(t) wird derart ermittelt, dass er zum einen den gewünschten Betrieb der elektrischen Maschine 1 - beispielsweise bei einer bestimmten Drehzahl und einem bestimmten Aussteuergrad - bewirkt und zum anderen gemäß einem vorbestimmten Optimierungskriterium OK optimiert ist. Das Optimierungskriterium OK kann nach Bedarf bestimmt sein. In der Regel wird es derart bestimmt sein, dass zumindest für bestimmte Frequenzen die mechanischen Schwingungen S der elektrischen Maschine 1 minimiert werden. Der im Schritt S23 ermittelte optimierte Spannungsverlauf U(t) (bzw. diesen charakterisierenden Werte wie beispielsweise Schaltzeitpunkte) wird in einem Schritt S24 im Umrichter 2 hinterlegt. Insbesondere kann eine Hinterlegung in einem Speicher 13 der Steuereinrichtung 5 erfolgen. Die Hinterlegung erfolgt in einem zweidimensionalen Feld, wobei je eine Dimension die mit der Drehzahl korrespondierende Frequenz und der Aussteuergrad sind.

In einem Schritt S25 wird die Grundfrequenz f1 um eine Frequenzänderung δf erhöht. Die Frequenzänderung δf des Schrittes S25 kann mit der Frequenzänderung δf des Schrittes S11 korrespondieren. Prinzipiell kann sie jedoch unabhängig davon bestimmt werden. In einem Schritt S26 wird sodann geprüft, ob die Grundfrequenz f1 eine Maximalfrequenz fmax erreicht hat. Solange dies nicht der Fall ist, wird zum Schritt S23 zurückgegangen. Anderenfalls ist die Vorgehensweise von FIG 5 beendet.

Das Optimierungsverfahren wird von einer Einrichtung automatisiert durchgeführt. Es ist möglich, dass die Parameter des Ermittlungsverfahrens und das Optimierungskriterium OK der Einrichtung fest vorgegeben sind. Alternativ ist es entsprechend der Darstellung in FIG 1 möglich, dass das Optimierungskriterium OK und/oder Parameter des Ermittlungsverfahrens der Einrichtung von außen vorgegeben werden. Parameter des Ermittlungsverfahrens können beispielsweise der Anfangswert fa und der Endwert fe der Grundfrequenz f1, die Angabe der Oberschwingungen und deren Anteile ai sein. Im Rahmen des Optimierungskriteriums OK können beispielsweise bestimmte Frequenzen oder Frequenzbereiche spezifiziert werden, innerhalb derer eine Minimierung von Schwingungen S erfolgen soll.

Es ist möglich, dass es sich bei der Einrichtung, die das Ermittlungsverfahren und vorzugsweise auch das Optimierungsverfahren durchführt, um eine spezielle Steuereinrichtung für den Stromrichter 4 handelt, die ausschließlich für diesen Zweck verwendet wird. Vorzugsweise handelt es sich bei der Einrichtung jedoch um die Steuereinrichtung 5 des Umrichters 2, die auch im Rahmen der normalen Ansteuerung des Stromrichters 4 verwendet wird.

Es ist möglich, dass die Steuereinrichtung 5 nur einen Normalbetrieb und das erfindungsgemäße Ermittlungsverfahren ausführen kann. In diesem Fall betreibt die Steuereinrichtung 5 den Umrichter 2 alternativ in einem Ermittlungsmodus oder in einem Normalmodus. In diesem Fall prüft die Steuereinrichtung 15 gemäß FIG 6 in einem Schritt S31, ob sie den Normalmodus oder den Ermittlungsmodus ausführen soll. Beispielsweise kann die Steuereinrichtung 5 im Schritt S31 prüfen, ob ihr von einem (nicht dargestellten) Bediener ein entsprechender Modus vorgegeben wird. Unter Umständen kann die Steuereinrichtung 5 auch selbsttätig erkennen, ob sie den Normalmodus oder den Ermittlungsmodus ausführen soll.

Je nach Ergebnis der Prüfung des Schrittes S31 geht die Steuereinrichtung 5 zu einem Schritt S32 oder zu Schritten S33 und S34 über. Der Schritt S32 entspricht dem Ermittlungsmodus. Im Schritt S32 führt die Steuereinrichtung 5 das erfindungsgemäße Ermittlungsverfahren aus, das obenstehend in Verbindung mit FIG 2 erläutert wurde. Die Schritte S33 und S34 entsprechen dem Normalmodus. Im Schritt S33 ermittelt die Steuereinrichtung 5 - beispielsweise anhand von Steuerbefehlen, die der Steuereinrichtung 5 von einer übergeordneten Einrichtung vorgegeben werden - eine Drehzahl, bei welcher die elektrische Maschine 1 betrieben werden soll, und damit eine Grundfrequenz f1. Weiterhin ermittelt die Steuereinrichtung 15 im Rahmen des Schrittes S33 einen Aussteuergrad G. Im Schritt S34 selektiert die Steuereinrichtung 5 für die korrespondierende Grundfrequenz f1 und den Aussteuergrad G den zugehörigen optimierten Spannungsverlauf U(t) und liest diesen Spannungsverlauf U(t) aus dem Speicher 13 aus. Den ausgelesenen Spannungsverlauf U(t) verwendet die Steuereinrichtung 15 im Schritt S34 zur Ansteuerung des Stromrichters 4.

Vorzugsweise ist die Steuereinrichtung 5 des Umrichters 2 jedoch auch in der Lage, das erfindungsgemäße Optimierungsverfahren auszuführen.

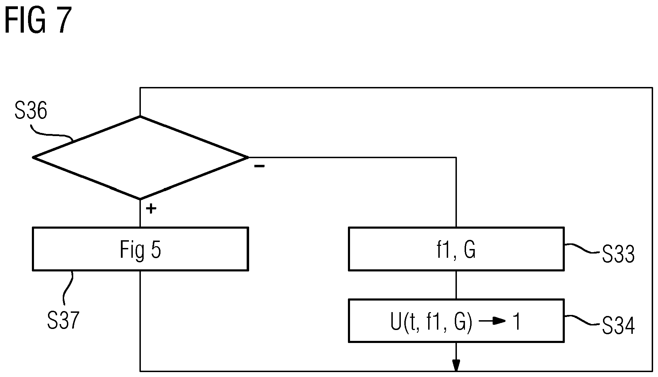

In diesem Fall betreibt die Steuereinrichtung 5 den Umrichter 2 gemäß FIG 7 alternativ in einem Optimierungsmodus oder im Normalmodus. Im Optimierungsmodus führt die Steuereinrichtung 5 ein Optimierungsverfahren (wie obenstehend erläutert) aus. In diesem Fall führt die Steuereinrichtung 5 den Ermittlungsmodus im Rahmen des Optimierungsmodus aus.

Gemäß FIG 7 prüft die Steuereinrichtung 5 in einem Schritt S36, ob sie den Normalmodus oder den Optimierungsmodus ausführen soll. Beispielsweise kann die Steuereinrichtung 5 im Schritt S31 prüfen, ob ihr von einem (nicht dargestellten) Bediener ein entsprechender Modus vorgegeben wird. Unter Umständen kann die Steuereinrichtung 5 auch selbsttätig erkennen, wenn sie erstmals mit der elektrischen Maschine 1 verbunden wird. In diesem Fall kann eine Ausführung des Optimierungsmodus automatisiert angestoßen und auch beendet werden.

Falls die Steuereinrichtung 5 den Optimierungsmodus ausführen soll, geht sie zu einem Schritt S37 über. Im Schritt S37 führt die Steuereinrichtung 5 eine Vorgehensweise aus, wie sie vorstehend in Verbindung mit FIG 5 erläutert wurde. Insbesondere erfolgt im Rahmen des Schrittes S37 die Hinterlegung der optimierten Spannungsverläufe U(t) für die verschiedenen Grundfrequenzen f1 im Speicher 13. Falls die Steuereinrichtung 5 den Normalmodus ausführen soll, geht sie zu zu den Schritten S33 und S34 über, die obenstehend bereits in Verbindung mit FIG 6 erläutert wurden.

Zusammengefasst betrifft die vorliegende Erfindung also folgenden Sachverhalt:

Durch entsprechende Ansteuerung eines Umrichters 2, über den eine elektrische Maschine 1 an ein elektrisches Versorgungsnetz 3 angeschaltet wird, wird ein Hochlauf der elektrischen Maschine 1 von einer Anfangsdrehzahl zu einer Enddrehzahl durchgeführt. Beim Hochlauf der elektrischen Maschine 1 wird die elektrische Maschine 1 mit einem jeweiligen Spannungsverlauf beaufschlagt, dessen zugehöriges Spannungsspektrum zusätzlich zu einer Grundschwingung bei einer Grundfrequenz f1 vorbestimmte Anteile vorbestimmter Oberschwingungen der Grundfrequenz f1 enthält. Mittels entsprechender Sensoren 10 bis 12 werden sich ergebende Strom- und mechanische Schwingungsverläufe erfasst. Anhand des zum Stromverlauf korrespondierenden Stromspektrums und des jeweiligen Spannungsspektrums wird eine elektrische Übertragungsfunktion GE bei mindestens einer der Oberschwingungen der Grundfrequenz f1 ermittelt, welche angibt, in welchem Umfang bei einer Anregung mit einer Spannung U einer bestimmten Frequenz f in der elektrischen Maschine 1 ein Strom gleicher Frequenz f angeregt wird. Anhand des jeweiligen Stromspektrums wird ein korrespondierendes jeweiliges Radialkraftspektrum im Luftspalt der elektrischen Maschine 1 ermittelt. Anhand des jeweiligen Radialkraftspektrums und des mit dem mechanischen Schwingungsverlauf korrespondierenden Schwingungsspektrums wird für mindestens eine Oberschwingung der Grundfrequenz f1 mindestens eine mechanische Übertragungsfunktion GMP, GMR der elektrischen Maschine 1 ermittelt. Die mechanische Übertragungsfunktion GMP, GMR gibt an, in welchem Umfang bei Anregung mit einer Radialkraft FRP, FRR im Luftspalt der elektrischen Maschine 1, die eine bestimmte Frequenz f aufweist, in der elektrischen Maschine 1 eine mechanische Schwingung S gleicher Frequenz f angeregt wird.

Die vorliegende Erfindung weist viele Vorteile auf. Insbesondere können sowohl die elektrische Übertragungsfunktion GE als auch die mechanischen Übertragungsfunktionen GMP, GMR schnell (in wenigen Minuten) und zuverlässig gemessen werden. Weiterhin sind für die Durchführung des erfindungsgemäßen Ermittlungsverfahrens und auch für die Durchführung des erfindungsgemäßen Optimierungsverfahrens keinerlei Zusatzgeräte erforderlich. Es ist vielmehr möglich, den Umrichter 2 und dessen Steuereinrichtung 5 zu verwenden.

**Patentansprüche**

1. Ermittlungsverfahren zum Ermitteln einer elektrischen und mindestens einer mechanischen Übertragungsfunktion (GE, GMP, GMR) einer elektrischen Maschine (1), die über einen Umrichter (2) an ein elektrisches Versorgungsnetz (3) angeschaltet wird,

   - wobei die elektrische Übertragungsfunktion (GE) angibt, in welchem Umfang bei einer Anregung mit einer Spannung (U) einer bestimmten Frequenz (f) in der elektrischen Maschine (1) ein Strom (I) gleicher Frequenz (f) angeregt wird,
   - wobei die mindestens eine mechanische Übertragungsfunktion (GMP, GMR) angibt, in welchem Umfang bei Anregung mit einer Radialkraft (FRP, FRR) im Luftspalt der elektrischen Maschine (1), die eine bestimmte Frequenz (f) aufweist, in der elektrischen Maschine (1) eine mechanische Schwingung (S) gleicher Frequenz (f) angeregt wird,
   - wobei durch entsprechende Ansteuerung des Umrichters (2) ein Hochlauf der elektrischen Maschine (1) von einer Anfangsdrehzahl zu einer Enddrehzahl durchgeführt wird,
   - wobei beim Hochlauf der elektrischen Maschine (1) die elektrische Maschine (1) mit einem jeweiligen Spannungsverlauf (U(t)) beaufschlagt wird,
   - wobei der jeweilige Spannungsverlauf (U(t)) derart bestimmt ist, dass ein zugehöriges Spannungsspektrum (U(f)) zusätzlich zu einer Grundschwingung bei einer Grundfrequenz (f1) vorbestimmte Anteile (ai) vorbestimmter Oberschwingungen der Grundfrequenz (f1) enthält,
   - wobei mittels entsprechender Sensoren (10 bis 12) zumindest ein sich ergebender korrespondierender jeweiliger Stromverlauf (I(t)) und ein sich ergebender korrespondierender mechanischer Schwingungsverlauf (S(t)) erfasst werden,
   - wobei anhand des jeweiligen Stromverlaufs (I(t)) ein korrespondierendes jeweiliges Stromspektrum (I(f)) ermittelt wird und anhand des jeweiligen Stromspektrums (I(f)) und des jeweiligen Spannungsspektrums (U(f)) die elektrische Übertragungsfunktion (GE) bei mindestens einer der vorbestimmten Oberschwingungen der Grundfrequenz (f1) ermittelt wird,
   - wobei anhand des jeweiligen Stromspektrums (I(f)) ein korrespondierendes jeweiliges Radialkraftspektrum (FRR(f), FRP(f)) im Luftspalt der elektrischen Maschine (1) ermittelt wird,
   - wobei anhand des erfassten jeweiligen mechanischen Schwingungsverlaufs (S(t)) ein korrespondierendes jeweiliges Schwingungsspektrum (S(f)) ermittelt wird und
   - wobei anhand des jeweiligen Radialkraftspektrums (FRR(f), FRP(f)) und des jeweiligen Schwingungsspektrums (S(f)) für mindestens eine Oberschwingung der Grundfrequenz (f1) die mindestens eine mechanische Übertragungsfunktion (GMP, GMR) der elektrischen Maschine (1) ermittelt wird.

2. Ermittlungsverfahren nach Anspruch 1, **dadurch gekennzeichnet, dass** für unmittelbar aufeinanderfolgende Oberschwingungen der Spannung (U) die Beziehung F2 - F1 > 2f1 gilt, wobei F1 und F2 die Frequenzen der beiden Oberschwingungen und f1 die Grundfrequenz (f1) sind.

3. Ermittlungsverfahren nach Anspruch 1 oder 2, **dadurch gekennzeichnet, dass** für die Oberschwingungen der Spannung (U) die Beziehung F = nf1 gilt, wobei F die Frequenz der jeweiligen Oberschwingung und f1 die Grundfrequenz (f1) sind, wobei n eine natürliche Zahl ist, welche eine der Beziehungen n = 2km + 1 und n = 2km - 1 erfüllt, wobei k die Anzahl an Phasen der elektrischen Maschine (1) ist und m eine natürliche Zahl größer als 1 ist.

4. Ermittlungsverfahren nach Anspruch 1, 2 oder 3, **dadurch gekennzeichnet, dass** das Radialkraftspektrum (FRR(f), FRP(f)) im Luftspalt der elektrischen Maschine (1) pulsierende und rotierende Radialkraftwellen (FRP, FRR) umfasst und dass für die pulsierenden und für die rotierenden Radialkraftwellen (FRP, FRR) je eine eigene mechanische Übertragungsfunktion (GMP, GMR) ermittelt wird.

5. Ermittlungsverfahren nach einem der obigen Ansprüche, **dadurch gekennzeichnet, dass** der mechanische Schwingungsverlauf (S(t)) eine Schwingung eines Elements der elektrischen Maschine (1) und/oder eine Schallabstrahlung ist.

6. Ermittlungsverfahren nach einem der obigen Ansprüche, **dadurch gekennzeichnet, dass** der Spannungsverlauf (U(t)) erfasst wird und dass anhand des erfassten Spannungsverlaufs (U(t)) das Spannungsspektrum (U(f)) ermittelt wird.

7. Ermittlungsverfahren nach einem der obigen Ansprüche, **dadurch gekennzeichnet, dass** es von einer Steuereinrichtung (5) des Umrichters (2) in einem Ermittlungsmodus des Umrichters (2) ausgeführt wird und dass die Steuereinrichtung (5) in einem Normalmodus des Umrichters (2) im Umrichter (2) hinterlegte optimierte Spannungsverläufe (U(t)) ausliest und verwendet.

8. Optimierungsverfahren zur Optimierung einer mechanischen Schwingung (S) einer elektrischen Maschine (1), die über einen Umrichter (2) an ein elektrisches Versorgungsnetz (3) angeschaltet wird,

    - wobei mittels eines Ermittlungsverfahrens nach einem der obigen Ansprüche eine elektrische und mindestens eine mechanische Übertragungsfunktion (GE, GMP, GMR) der elektrischen Maschine (1) ermittelt werden und
    - wobei unter Verwendung der ermittelten Übertragungsfunktionen (GE, GMP, GMR) gemäß einem Optimierungskriterium (OK) für Frequenzen (f1) und Aussteuergrade (G) der elektrischen Maschine (1) ein jeweiliger optimierter Spannungsverlauf (U(t)) ermittelt und im Umrichter (2) hinterlegt wird.

9. Optimierungsverfahren nach Anspruch 8, **dadurch gekennzeichnet, dass** einer das Optimierungsverfahren durchführenden Einrichtung (5) das Optimierungskriterium (OK) und/oder Parameter (fa, fi, ai) des Ermittlungsverfahrens von außen vorgegeben werden.

10. Optimierungsverfahren nach Anspruch 8 oder 9, **dadurch gekennzeichnet, dass** es von einer Steuereinrichtung (5) des Umrichters (2) in einem Optimierungsmodus des Umrichters (2) ausgeführt wird und dass die Steuereinrichtung (5) in einem Normalmodus des Umrichters (2) die im Optimierungsmodus im Umrichter (2) hinterlegten optimierten Spannungsverläufe (U(t)) ausliest und verwendet.

11. Umrichter zum Anschalten einer elektrischen Maschine (1) an ein elektrisches Versorgungsnetz (3), wobei der Umrichter eine Steuereinrichtung (5) aufweist, **dadurch gekenn zeichnet**, dass die Steuereinrichtung (5) den Umrichter in einem Normalmodus oder in einem Ermittlungsmodus betreibt, dass die Steuereinrichtung (5) als softwareprogrammierbare Einrichtung ausgebildet ist, umfassend Mittel zur Ausführung eines Ermittlungsverfahrens nach Anspruch 7 im Ermittlungsmodus und dass die Steuereinrichtung (5) im Normalmodus im Umrichter hinterlegte Spannungsverläufe (U(t)) ausliest und verwendet.

12. Umrichter nach Anspruch 11, **dadurch gek enn zeichnet**, dass die Steuereinrichtung (5) den Ermittlungsmodus im Rahmen eines Optimierungsmodus ausführt, dass die Steuereinrichtung (5) Mittel zur Ausführung eines Optimierungsverfahrens nach Anspruch 10 im Optimierungsmodus aufweist und dass die Steuereinrichtung (5) im Normalmodus die im Optimierungsmodus im Umrichter hinterlegten optimierten Spannungsverläufe (U(t)) ausliest und verwendet.

13. Steuerprogramm für eine softwareprogrammierbare Steuereinrichtung (5) eines Umrichters (2) nach einem der Ansprüche 11 oder 12, wobei das Steuerprogramm Maschinencode (9) umfasst, der von der Steuereinrichtung (5) unmittelbar ausführbar ist und dessen Ausführung durch die Steuereinrichtung (5) die Betriebsweise des Umrichters (2) festlegt, wobei die Ausführung des Maschinencodes (9) bewirkt, dass der Umrichter (2) gemäß Anspruch 11 oder 12 ausgebildet ist.

## Claims

1. Determination method for determining one electrical and at least one mechanical transfer function (GE, GMP, GMR) of an electric machine (1) which is connected via an inverter (2) to an electrical supply network (3),

    - wherein the electrical transfer function (GE) indicates to what extent a current (I) of the same frequency (f) is excited in the electric machine (1) during an excitation with a voltage (U) of a particular frequency (f),
    - wherein the at least one mechanical transfer function (GMP, GMR) indicates to what extent a mechanical vibration (S) of the same frequency (f) is excited in the electric machine (1) during excitation with a radial force (FRP, FRR) in the air gap of the electric machine (1) which has a certain frequency (f),
    - wherein by appropriate control of the inverter (2) a ramp-up of the electric machine (1) from an initial speed to a final speed is performed,
    - wherein during the ramp-up of the electric machine (1) a respective voltage curve (U(t)) is applied to the electric machine (1),
    - wherein the respective voltage curve (U(t)) is determined such that an associated voltage spectrum (U(f)) contains predetermined portions (ai) of predetermined harmonics of the fundamental frequency (f1) in addition to a fundamental vibration at a fundamental frequency (f1),
    - wherein by means of appropriate sensors (10 to 12) at least one resulting corresponding respective current path (I(t)) and a resulting corresponding mechanical vibration curve (S(t)) are detected,

- wherein based on the respective current path (I(t)) a corresponding respective current spectrum (I(f)) is determined and based on the respective current spectrum (I(f)) and the respective voltage spectrum (U(f)) the electrical transfer (GE) is determined for at least one of the predetermined harmonics of the fundamental frequency (f1),
- wherein based on the respective current spectrum (I(f)) a corresponding respective radial force spectrum (FRR(f), FRP(f)) is determined in the air gap of the electric machine (1),
- wherein based on the detected respective mechanical vibration curve (S(t)) a corresponding respective vibration spectrum (S(f)) is determined and
- wherein based on the respective radial force spectrum (FRR(f), FRP(f)) and the respective vibration spectrum (S(f)) for at least one harmonic of the fundamental frequency (f1) the at least one mechanical transfer function (GMP, GMR) of the electric machine (1) is determined.

2. Determination method according to claim 1, **characterised in that** for directly successive harmonics of the voltage (U), the relationship F2 - F1 > 2f1 applies, where F1 and F2 are the frequencies of the two harmonics and f1 is the fundamental frequency (f1).

3. Determination method according to claim 1 or 2, **characterised in that** for the harmonics of the voltage (U), the relationship f = nf1 applies, where F is the frequency of the respective harmonic and f1 is the fundamental frequency (f1), wherein n is a natural number which fulfils one of the relationships n = 2km + 1 and n = 2km - 1, where k is the number of phases of the electric machine (1) and m is a natural number greater than 1.

4. Determination method according to claim 1, 2 or 3, **characterised in that** the radial force spectrum (FRR(f), FRP(f)) comprises pulsing and rotating radial force waves (FRP, FRR) in the air gap of the electric machine (1), and that a separate mechanical transfer function (GMP, GMR) is determined for each of the pulsing and for each of the rotating radial force waves (FRP, FRR).

5. Determination method according to one of the above claims, **characterised in that** the mechanical vibration curve (S(t)) is a vibration of an element of the electric machine (1) and/or a sound radiation.

6. Determination method according to one of the above claims, **characterised in that** the voltage curve (U(t)) is detected and that based on the detected voltage curve (U(t)) the voltage spectrum (U(f)) is determined.

7. Determination method according to one of the above claims, **characterised in that** it is executed in a detection mode of the inverter (2) by a control device (5) of the inverter (2) and that in a normal mode of the inverter (2) the control device (5) reads and uses optimised voltage curves (U(t)) stored in the inverter (2).

8. Optimisation method for optimising a mechanical vibration (S) of an electric machine (1) which is connected via an inverter (2) to an electrical supply network (3),

   - wherein by means of a determination method according to one of the above claims one electrical and at least one mechanical transfer function (GE, GMP, GMR) of the electric machine (1) are determined and
   - wherein using the determined transfer functions (GE, GMP, GMR) according to an optimisation criterion (OK) for frequencies (f1) and modulation degrees (G) of the electric machine (1) a respective optimised voltage curve (U(t)) is determined and is stored in the inverter (2).

9. Optimisation method according to claim 8, **characterised in that** the optimisation criterion (OK) and/or parameters (fa, fi, ai) of the determination method are specified externally to a device (5) performing the optimisation method.

10. Optimisation method according to claim 8 or 9, **characterised in that** it is executed by a control device (5) of the inverter (2) in an optimisation mode of the inverter (2) and that the control device (5) in a normal mode of the inverter (2) reads and uses the voltage curves (U(t)) optimised in the optimisation mode and stored in the inverter (2).

11. Inverter for connecting an electric machine (1) to an electrical supply network (3), wherein the inverter has a control device (5), **characterised in that** the control device (5) operates the inverter in a normal mode or in a determination mode, that the control device (5) is designed as a software-programmable device, comprising means for executing a determination method according to claim 7 in the determination mode, and that in the normal mode the control device (5) reads and uses voltage curves (U(t)) stored in the inverter.

12. Inverter according to claim 11, **characterised in that** the control device (5) executes the determination mode in the context of an optimisation mode, that in the optimisation mode the control device (5) has means for executing an optimisation method according to claim 10, and that in the normal mode the control device (5) reads and uses the voltage curves (U(t)) optimised in the optimisation mode and stored in the inverter.

13. Control program for a software-programmable control device (5) of an inverter (2) according to one of claims 11 or 12, wherein the control program comprises machine code (9) which can be executed directly by the control device (5) and the execution thereof by the control device (5) determines the mode of operation of the inverter (2), wherein the execution of the machine code (9) causes the inverter (2) to be formed according to claim 11 or 12.

**Revendications**

1. Procédé de détermination pour déterminer une fonction (GE) de transfert électrique et/ou au moins une fonction (GMP, GMR) de transfert mécanique d'une machine (1) électrique, qui est connectée à un réseau (3) d'alimentation électrique par un onduleur (2),

   - dans lequel la fonction (GE) de transfert électrique indique dans quelle mesure, lors d'une excitation par une tension (U) d'une fréquence (f) déterminée, on excite un courant de même fréquence (f) dans la machine (1) électrique,
   - dans lequel la au moins une fonction (GMP, GMR) de transfert mécanique indique dans quelle mesure, lorsqu'on excite, par une force (FRP, FRR) radiale, dans l'entrefer de la machine (1) électrique, qui a une fréquence (f) déterminée, on excite une oscillation (S) mécanique de même fréquence (f) dans la machine (1) électrique,
   - dans lequel, par une commande correspondante de l'onduleur (2), on effectue un démarrage de la machine (1) électrique d'une vitesse de rotation initiale à une vitesse de rotation finale,
   - dans lequel, lors du démarrage de la machine (1) électrique, on applique à la machine (1) électrique une courbe (U(t)) de tension respective,
   - dans lequel on détermine la courbe (U(t)) de tension respective, de manière à ce qu'un spectre (U(f)) de tension associé contienne, supplémentairement à une oscillation fondamentale à une fréquence (f1) fondamentale, des proportions (ai) déterminées à l'avance d'harmoniques déterminés à l'avance de la fréquence (f1) fondamentale,
   - dans lequel, au moyen de capteurs (10 à 12) correspondants, on relève au moins une courbe (I(t)) de courant respective correspondante, qui s'ensuit, et une courbe (S(t)) d'oscillation mécanique correspondante, qui s'ensuit,
   - dans lequel, à l'aide de la courbe (I(t)) de courant respective, on détermine un spectre (I(f)) de courant respectif correspondant et à l'aide du spectre (I(f)) de courant respectif et du spectre (U(f)) de tension respectif, on détermine la fonction (GE) de transfert électrique à au moins l'un des harmoniques déterminés à l'avance de la fréquence (f1) fondamentale,
   - dans lequel, à l'aide du spectre (I(f)) de courant respectif, on détermine un spectre (FRR(f), FRP(f)) de force radiale respectif correspondant dans l'entrefer de la machine (1) électrique,
   - dans lequel, à l'aide de la courbe (S(t)) d'oscillation mécanique respective relevée, on détermine un spectre (S(f)) d'oscillation respective correspondant et
   - dans lequel, à l'aide du spectre (FRR (f), FRP (f)) de force radiale respectif et du spectre (S(f)) d'oscillation respectif, on détermine, pour au moins un harmonique de la fréquence (f1) fondamentale, la au moins une fonction (GMP, GMR) de transfert mécanique de la machine (1) électrique.

2. Procédé de détermination suivant la revendication 1, **caractérisé en ce que**, pour des harmoniques se succédant directement de la tension (U), on a la relation F2 - F1 > 2f1, F1 et F2 étant les fréquences des deux harmoniques et f1 la fréquence (f1) de base.

3. Procédé de détermination suivant la revendication 1 ou 2, **caractérisé en ce que**, pour des harmoniques de la tension (U), on a la relation F = nfl, F étant la fréquence de l'harmonique respectif et f1 la fréquence (f1) fondamentale, n étant un nombre naturel, qui satisfait l'une des relations n = 2km + 1 et n = 2km - 1, k étant le nombre de phases de la machine (1) électrique et m un nombre naturel plus grand que 1.

4. Procédé de détermination suivant la revendication 1, 2 ou 3, **caractérisé en ce que** le spectre (FRR (f), FRP (f)) de force radiale, dans l'entrefer de la machine (1) électrique, comprend des ondes (FRP, FRR) de force radiale pulsées et de rotation et **en ce que**, pour les ondes (FRP, FRR) de force radiale pulsées et de rotation, on détermine respectivement une fonction (GMP, GMR) de transfert mécanique propre.

5. Procédé de détermination suivant l'une des revendications précédentes, **caractérisé en ce que** la courbe (S(t)) d'oscillation mécanique est une oscillation d'un élément de la machine (1) électrique et/ou une émission de son.

**6.** Procédé de détermination suivant l'une des revendications précédentes, **caractérisé en ce que** l'on relève la courbe (U(t)) de tension et **en ce que** l'on détermine le spectre (U(f)) de tension à l'aide de la courbe (U(t)) de tension relevée.

**7.** Procédé de détermination suivant l'une des revendication précédentes, **caractérisé en ce qu'**il est effectué, dans un mode de détermination de l'onduleur (2), par un dispositif (5) de commande de l'onduleur (2) et **en ce que** le dispositif (5) de commande lit et utilise, dans un mode normal de l'onduleur (2), des courbes (U(t)) de tension optimisées et mémorisées dans l'onduleur (2).

**8.** Procédé d'optimisation pour optimiser une oscillation (S) mécanique d'une machine (1) électrique, qui est connectée à un réseau (3) d'alimentation électrique par un onduleur (2),

- dans lequel, au moyen d'un procédé de détermination suivant l'une des revendications précédentes, on détermine une fonction (GE) de transfert électrique et au moins une fonction (GMP, GMR) de transfert mécanique de la machine (1) électrique et
- dans lequel, en utilisant les fonctions (GE, GMP, GMR) de transfert déterminées, on détermine, suivant un critère (OK) d'optimisation de fréquences et de degrés (G) de modulation de la machine (1) électrique, une courbe (U(t)) de tension optimisée respectivement et on la met en mémoire dans l'onduleur (2).

**9.** Procédé d'optimisation suivant la revendication 8, **caractérisé en ce que** l'on prescrit, de l'extérieur, à un dispositif (5) effectuant le procédé d'optimisation, le critère au cas d'optimisation et/ou des paramètres (fa, fi, ai) du procédé de détermination à un dispositif (5) effectuant le procédé d'optimisation.

**10.** Procédé d'optimisation suivant la revendication 8 ou 9, **caractérisé en ce qu'**il est effectué par un dispositif (5) de commande de l'onduleur (2) dans un mode d'optimisation de l'onduleur (2), et **en ce que** le dispositif (5) de commande lit et utilise, dans un mode normal de l'onduleur (2), les courbes (U(t)) de tension optimisées dans le mode d'optimisation et mises en mémoire dans l'onduleur (2).

**11.** Onduleur de connexion d'une machine (1) électrique à un réseau (3) d'alimentation électrique, l'onduleur ayant un dispositif (5) de commande, **caractérisé en ce que** le dispositif (5) de commande fait fonctionner l'onduleur dans un mode normal ou dans un mode de détermination, **en ce que** le dispositif (5) de commande est constitué sous la forme d'un dispositif programmable par logiciel, comprenant des moyens d'exécution d'un procédé de détermination suivant la revendication 7 en mode de détermination et **en ce que** le dispositif (5) de commande lit et utilise, dans le mode normal, des courbes (U(t)) de tension mises en mémoire dans l'onduleur.

**12.** Onduleur suivant la revendication 11, **caractérisé en ce que** le dispositif (5) de commande exécute le mode de détermination dans le cadre d'un mode d'optimisation, **en ce que** le dispositif (5) de commande a, dans le mode d'optimisation, des moyens d'exécution d'un procédé d'optimisation suivant la revendication (10) et **en ce que** le dispositif (5) de commande lit et utilise, dans le mode normal, les courbes (U(t)) de tension optimisées dans le mode d'optimisation et mises en mémoire dans l'onduleur.

**13.** Programme de commande d'un dispositif (5) de commande programmable par logiciel d'un onduleur (2) suivant l'une des revendications 11 ou 12, le programme de commande comprenant un code (9) de machine, qui peut être exécuté directement par le dispositif (5) de commande et dont l'exécution, par le dispositif (5) de commande, fixe le mode de fonctionnement de l'onduleur (2), l'exécution du code (9) de machine faisant que l'onduleur (2) est constitué suivant la revendication 11 ou 12.

FIG 1

OK    ai    fa, fe

FIG 2

```
        ┌─────────────────┐
        │      START       │
        └─────────────────┘
                 │
        ┌─────────────────┐
        │     f1 = fa      │───S1
        └─────────────────┘
                 │
        ┌─────────────────┐
        │                  │───S2
        └─────────────────┘
                 │
        ┌─────────────────┐
        │      U(f)        │───S3
        └─────────────────┘
                 │
              ◇ S4
             ╱     ╲
            ╱  ai?  ╲──── ─ ──────────────┐
            ╲       ╱                       │
             ╲     ╱                        │
              ◇                             │
              │ +                           ▼
        ┌─────────────────┐    ┌──────────────────────┐
        │    U(t) → 1      │─S6 │                      │───S5
        └─────────────────┘    └──────────────────────┘
                 │                          │
        ┌─────────────────┐                 │
        │   I(t); S(t); U(t) │───S7          │
        └─────────────────┘                 │
                 │                          │
        ┌───────────────────────┐          │
        │ I(t) → I(f); U(t) → U(f)│──S8      │
        └───────────────────────┘          │
                 │                          │
        ┌───────────────────────────┐      │
        │ GE(11f1); GE(17f1); GE(23f1)│──S9   │
        └───────────────────────────┘      │
                 │                          │
        ┌───────────────────────────┐      │
        │ FRR(10f1, 16f1, 22f1)      │      │
        │ FRP(12f1, 18f1, 24f1)      │──S10  │
        └───────────────────────────┘      │
                 │                          │
        ┌─────────────────┐                 │
        │    S(t) → S(f)   │───S11           │
        └─────────────────┘                 │
                 │                          │
        ┌───────────────────────────────────┐│
        │ GMR(10f1);  GMR(16f1);  GMR(22f1) ││
        │ GMP(12f1);  GMP(18f1);  GMP(24f1) │─S12
        └───────────────────────────────────┘
                 │
        ┌─────────────────┐
        │   f1 = f1 + δf   │───S13
        └─────────────────┘
                 │
              ◇ S14
             ╱     ╲
            ╱ f1 > fe╲──── ─ ──────────────┘
            ╲       ╱
             ╲     ╱
              ◇
              │ +
        ┌─────────────────┐
        │      STOP        │
        └─────────────────┘
```

FIG 3

FIG 4

FIG 5

```
        ┌─────────────────┐
        │      START       │
        └─────────────────┘
                 │
                 ▼
        ┌─────────────────┐
        │      Fig 2       │─── S21
        └─────────────────┘
                 │
                 ▼
        ┌─────────────────┐
        │    f1 = fmin     │─── S22
        └─────────────────┘
                 │
                 ▼
        ┌─────────────────┐
        │     U(t, f1)     │─── S23
        └─────────────────┘
                 │
                 ▼
        ┌─────────────────┐
        │       →13        │─── S24
        └─────────────────┘
                 │
                 ▼
        ┌─────────────────┐
        │   f1 = f1 + δf   │─── S25
        └─────────────────┘
                 │
                 ▼           S26
             ╱────────╲
            ╱  f1 > fmax ╲ ───
            ╲          ╱   −
             ╲────────╱
                 │ +
                 ▼
        ┌─────────────────┐
        │      STOP        │
        └─────────────────┘
```

FIG 6

```
   S31
    ╱────────╲
   ╱          ╲ ───
   ╲          ╱   −
    ╲────────╱
        │ +
        ▼
   ┌──────────┐          ┌──────────┐
   │   Fig 2  │          │   f1, G   │─── S33
   └──────────┘          └──────────┘
     │                        │
    S32                       ▼
                     ┌──────────────────┐
                     │  U(t, f1, G) → 1  │─── S34
                     └──────────────────┘
```

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009056784 A1

- EP 2421148 A1

**In der Beschreibung aufgeführte Nicht-Patentliteratur**

- **T. EILINGER.** Lärmerzeugung in wechselrichtergespeisten Asynchronmaschinen und Lärmbeeinflussung durch optimierte Pulsmuster. *Eidgenössische Technische Hochschule Zürich,* 1997